Europäisches Patentamt

**European Patent Office**

**Office européen des brevets**

(19)

(11) Veröffentlichungsnummer: **0 203 205**
**B1**

(12) **EUROPÄISCHE PATENTSCHRIFT**

(45) Veröffentlichungstag der Patentschrift:
27.12.89

(21) Anmeldenummer: 85105158.1

(22) Anmeldetag: 26.04.85

(51) Int. Cl.⁴: **G 11 B 5/842,** G 11 B 5/706,
G 11 B 5/712

(54) Magnetaufzeichnungsträger und Verfahren zu seiner Herstellung.

(43) Veröffentlichungstag der Anmeldung:
03.12.86 Patentblatt 86/49

(45) Bekanntmachung des Hinweises auf die Patenterteilung:
27.12.89 Patentblatt 89/52

(84) Benannte Vertragsstaaten:
DE FR GB

(56) Entgegenhaltungen:
EP-A-0 064 156
EP-A-0 099 259
EP-A-0 105 079
DE-A-3 017 833
DE-B-1 295 732
US-A-4 280 918

Die Akte enthält technische Angaben, die nach
dem Eingang der Anmeldung eingereicht wurden
und die nicht in dieser Patentschrift enthalten sind.

(73) Patentinhaber: **IBM DEUTSCHLAND GMBH,
Pascalstrasse 100, D-7000 Stuttgart 80 (DE)**
(84) Benannte Vertragsstaaten: **DE**

(73) Patentinhaber: **International Business Machines
Corporation, Old Orchard Road, Armonk, N.Y.
10504 (US)**
(84) Benannte Vertragsstaaten: **FR GB**

(72) Erfinder: **Bandara, Upali, Dr. Dipl.- Chem.,
Widmaierstrasse 146, D-7000 Stuttgart 80 (DE)**
Erfinder: **Homola, Andrew M.,Dr. Dipl.- Chem.,
5600 Cottle Road K64/282, San Jose CA 95 193
(US)**
Erfinder: **Steiner, Werner, Dipl.- Ing., Zeisigweg
17/1, D-7030 Böblingen (DE)**
Erfinder: **Trippel, Gerhard, Dr. Dipl.- Phys.,
Steinenbronnerstrasse 15, D-7032 Sindelfingen
(DE)**

(74) Vertreter: **Oechssler, Dietrich, Dr. rer. nat., IBM
Deutschland GmbH Patentwesen und
Urheberrecht Schönaicher Strasse 220, D-7030
Böblingen (DE)**

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

EP 0 203 205 B1

**Beschreibung**

Die Erfindung betrifft einen Magnetaufzeichnungsträger, welcher auf einem Substrat eine magnetische Beschichtung aufweist, deren Dicke im µm-Bereich liegt und welche aus einem Bindemittel, magnetischen Teilchen und gegebenenfalls abriebfesten Teilchen besteht, und ein Verfahren zum Herstellen solcher Aufzeichnungsträger, bei dem Eisenoxidteilchen, das Bindemittel und gegebenenfalls die abriebfesten Teilchen auf das Substrat aufgebracht werden und das Bindemittel gehärtet wird.

Bei Magnetaufzeichnungsträgern, zu denen insbesondere Magnetplatten und Magnetbänder gehören, geht der Trend zu zunehmend höheren Speicherdichten. Hohe Speicherdichten setzen eine geringe Dicke der magnetischen Beschichtung und eine hohe Koerzitivfeldstärke der Magnetteilchen voraus. Trotzdem muß das Lesesignal hoch sein, d. h. es sind Magnetteilchen mit hoher Magnetisierung erforderlich. Eine hohe Magnetisierung ist auch notwendig, um kleine Magnetpartikel verwenden zu können. Diese wiederum braucht man für ein rauscharmes Signal.

Kleine Teilchen aus reinem Eisen haben die erwünschte hohe Magnetisierung. Aber die Verwendung von Magnetteilchen aus reinem Eisen ist bisher nur bei Magnetbändern mit relativ dicken (ungefähr $\geq$ 5 µm) Magnetschichten z. B. aus der EP Anmeldung 0 099 259 bekannt, weil bei der regelmäßigen Verteilung von Eisenteilchen in einer Schicht im µm-Bereich Schwierigkeiten auftreten. Üblicherweise werden magnetische Beschichtungen aufgebracht, indem eine Dispersion der magnetischen Teilchen in einer flüssigen Matrix auf ein Substrat aufgebracht wird. Die Dispersion von Partikeln in einer flüssigen Matrix ist bestimmt von attraktiven und repulsiven Kräften zwischen den Partikeln. Die repulsiven Kräfte, die die Dispersionsstabilität bestimmen, sind elektrostatischer Natur. Ihnen wirken die attraktiven Kräfte entgegen. Diese sind van der Waal'sche Kräfte und im Falle magnetischer Partikel magnetostatische Anziehungskräfte. Bei Eisenteilchen sind diese magnetostatischen Anziehungskräfte so groß, daß eine Dispergierung sehr schwierig ist. Die Dispersionsstabilität konnte deshalb bisher nur in höherviskosen Systemen erzielt werden, welche zur Herstellung der relativ dicken Magnetschichten auf Magnetbändern verwendet werden. Bei dem aus der genannten EP Anmeldung bekannten Verfahren werden die ferromagnetischen Teilchen zusätzlich oberflächenbehandelt, indem sie vor dem Vermischen mit dem Bindemittel zunächst in einer elektrolytischen Lösung dispergiert und dann mit einem Netzmittel behandelt, welches eine elektrische Ladung einer Polarität aufweist, welche der Ladung auf der Oberfläche der Teilchen entgegengesetzt ist. Bei der Herstellung von Magnetplatten, bei denen ja die magnetischen Beschichtungen wesentlich dünner sind, haben die Mischungen aus magnetischen Teilchen und Bindemittel eine wesentlich niedrigere Viskosität. Die Dispersion von Eisenteilchen in solchen Mischungen ist deshalb unvollständig, bzw. die Eisenteilchen agglomerieren zu Haufen, welche nicht nur einen unerwünscht großen Durchmesser haben, sondern in denen auch die magnetischen Momente teilweise kompensiert sind, was eine niedrige und über die Schicht inhomogene Magnetisierung zur Folge hat. Es sei an dieser Stelle angemerkt, daß wegen der Dicke der magnetischen Beschichtung in den üblichen Magnetbändern eine - durch nichtoptimale Dispersion verursacht - Inhomogenität der Magnetisierung der Eisenteilchen bzw. Eisenteilchenaggregate tolerierbar ist - dies ist ein weiterer Grund, warum Eisenteilchen schon bisher in Magnetbändern Verwendung fanden -, nicht aber bei den Magnetplatten mit ihren wesentlich dünneren magnetischen Beschichtungen.

Das Problem der schlechten Dispergierbarkeit tritt auch - wenn auch in geringerem Maß - bei $Fe_2O_3$-Teilchen auf.

In der US-Patentschrift 4 280 918 ist eine Methode zur besseren Dispergierbarkeit von $Fe_2O_3$-Teilchen beschrieben, bei welcher die $Fe_2O_3$-Teilchen mit $SiO_2$ umhüllt werden. In der US-Patentschrift 4 333 961 ist auch eine Methode beschrieben, um so mit $SiO_2$ umhüllte $Fe_2O_3$-Teilchen einheitlicher Größe in Form einer Monolage auf ein Substrat aufzubringen. Wie T. Sueyoshi u. a. in einem Vortrag mit dem Titel "Morphology of Fine Iron Particles" in einem im September 1983 auf der M.R.M. Conference in Ferrara, Italien gehaltenen Vortrag berichtet haben, ist es auch gelungen, mit $SiO_2$ umhüllte $Fe_2O_3$-Partikel in einer Wasserstoffatmosphäre bei Temperaturen zwischen 250 und 350°C zu Fe zu reduzieren. Es hat sich aber gezeigt, daß die dabei erzeugten, mit $SiO_2$ umhüllten Eisenpartikel fast genauso schwer wie nicht umhüllte Eisenteilchen in einem Bindemittel niedriger Viskosität dispergiert oder als Monolage auf einem Substrat aufgebracht werden können.

Es ist die Aufgabe der Erfindung, einen Magnetaufzeichnungsträger mit dünner magnetischer Beschichtung, in welcher magnetische Teilchen aus Eisen enthalten sind, mit hoher einheitlicher Magnetisierung über die ganze Schicht und ein einfaches Verfahren anzugeben, um einen solchen Magnetaufzeichnungsträger reproduzierbar in einer fabrikmäßigen Fertigung herzustellen.

Diese Aufgabe wird mit einem Magnetaufzeichnungsträger der eingangs genannten Art mit den Merkmalen des kennzeichnenden Teils des Patentanspruchs 1 und mit Verfahren der eingangs genannten Art mit den Merkmalen der kennzeichnenden Teile der Patentansprüche 6 und 9 gelöst.

Der erfindungsgemäße Magnetaufzeichnungsträger weist eine einheitliche, hohe Magnetisierung auf. Dies bedeutet, daß in der magnetischen Beschichtung, in welcher ja angesichts ihrer geringen Dicke und der geforderten hohen Speicherdichte die Packungsdichte der Magnetteilchen relativ hoch sein muß, tatsächlich keine teilweise Aggregation der Eisenteilchen bzw. keine teilweise Kompensation der magnetischen Momente der Eisenteilchen vorliegt. Es ist zweifellos überraschend, daß es möglich ist, die genannten Merkmale gleichzeitig zu verwirklichen.

Bei einer vorteilhaften Ausführungsform des erfindungsgemäßen Magnetaufzeichnungsträgers sind die Eisenteilchen in dem Bindemittels dispergiert, wobei die Eisenteilchen mit einer $SiO_2$-Schicht eingehüllt sein können oder auch nicht.

Bei einer anderen vorteilhaften Ausführungsform des erfindungsgemäßen Magnetaufzeichnungsträgers wird die magnetische Beschichtung gebildet aus einer Schicht aus mit $SiO_2$ umhüllten Eisenteilchen, welche auf dem Substrat aufliegt, und einer darauf aufgebrachten Schicht aus dem Bindemittel, welche gegebenenfalls auch abriebfeste Partikel enthält. Diese Ausführungsform hat gegenüber der zuerst genannten den Vorteil, daß die magnetische Beschichtung wesentlich dünner sein kann.

Durch die nicht naheliegende Vorgehensweise, die Magnetteilchen in der Form von $Fe_2O_3$, welches eine geringere Magnetisierung hat als reines Eisen, zuerst auf das Substrat aufzubringen, an ihrem endgültigen Platz und in ihrer endgültigen Lage zu fixieren und erst dann zu Eisen zu reduzieren, gelingt .es bei dem. erfindungsgemäßen Verfahren, das bisher bei Eisenteilchen ungelöste Dispersionsproblem elegant zu umgehen.

Bei einer vorteilhaften Ausführungsform des erfindungsgemäßen Verfahrens werden die Eisenoxidteilchen und gegebenenfalls die abriebfesten Teilchen in einer Mischung des Bindemittels mit einem Lösungsmittel dispergiert, die Dispersion auf das Substrat aufgebracht und gehärtet und anschließend oder überlappend in einer Wasserstoff enthaltenden Atmosphäre reduziert. Die Eisenoxidteilchen können dabei vor dem Dispergieren mit $SiO_2$ bzw. mit einer Mischung aus $SiO_2$ und $Al_2O_3$ eingehüllt worden sein. Durch den gewählten Verfahrensablauf ist gewährleistet, daß, wenn reduziert wird, die Viskosität des Bindemittels so hoch ist, daß eine Agglomeration und/oder eine Umorientierung der sich bildenden Eisenteilchen trotz der starken Kräfte, welche die Eisenteilchen aufeinander ausüben, nicht mehr möglich ist. Überraschend ist dabei, daß der Kontakt zwischen den Eisenoxidteilchen und dem Wasserstoff enthaltenden Gas offenbar nicht nennenswert durch das Bindemittel und gegebenenfalls die Umhüllung behindert wird. Die Dispergierung der umhüllten Eisenoxidteilchen ist noch vollkommener als bei den nichtumhüllten Eisenoxidteilchen, d. h. der zusätzliche Verfahrensschritt des Umhüllens wird dann angewandt werden, wenn es auf eine extrem homogene Verteilung von magnetischen Teilchen gleichen Durchmessers in der magnetischen Beschichtung ankommt.

Bei einer anderen Ausführungsform des erfindungsgemäßen Verfahrens werden die mit $SiO_2$ oder $SiO_2/Al_2O_3$ eingehüllten Eisenoxidteilchen in dünner Schicht - unter Vermittlung einer zuvor auf dem Substrat niedergeschlagenen aktiven Schicht - auf das Substrat aufgebracht, anschließend in einer Wasserstoff enthaltenden Atmosphäre reduziert, daraufhin mit einer das Bindemittel, ein Lösungmittel und gegebenenfalls abriebfeste Teilchen enthaltenden Mischung beschichtet, welche dann gehärtet wird. Die in dünner Schicht aufgebrachten, umhüllten Eisenoxidteilchen werden mittels elektrostatischer Kräfte an dem Substrat festgehalten. Überraschenderweise sind die elektrostatischen Kräfte so stark, daß auch die starken magnetostatischen Kräfte, welche bei der Reduktion des Eisenoxids im Eisen entstehen, nicht in der Lage sind, die entstandenen umhüllten Eisenteilchen aus ihrer Verankerung zu reißen und dadurch ihre Lage und ihre Orientierung zueinander zu ändern.

Weitere vorteilhafte Ausgestaltungen des erfindungsgemäßen Magnetaufzeichnungsträgers und des erfindungsgemäßen Verfahrens sind in den Unteransprüchen angeführt.

Die Erfindung wird anhand von durch Zeichnungen erläuterten Ausführungsbeispielen beschrieben. Es zeigen:

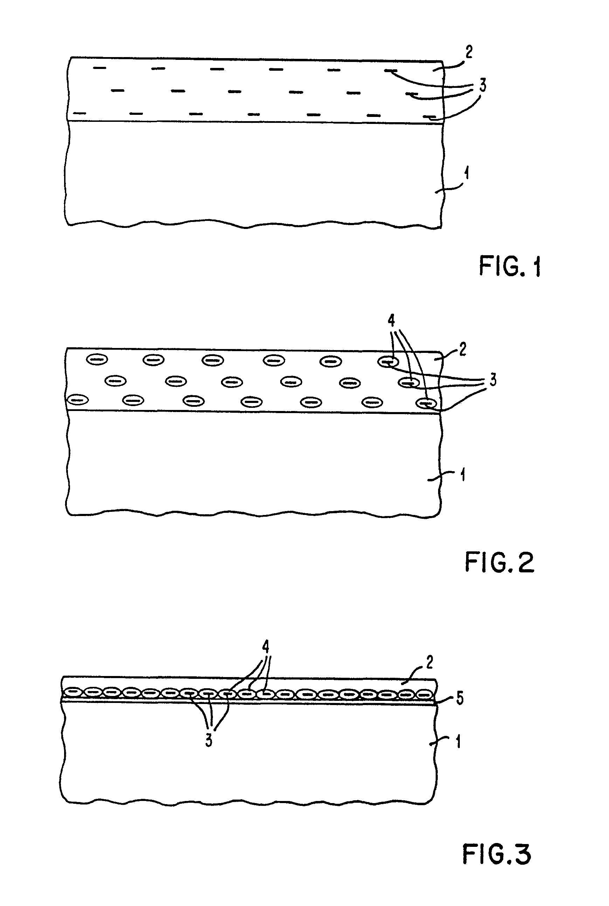

Fig. 1 bis 3 in schematischer Querschnittsdarstellung Ausschnitte aus drei Ausführungsformen des erfindungsgemäßen Magnetaufzeichnungsträgers.

Bei den beanspruchten Magnetaufzeichnungsträgern handelt es sich um Magnetplatten und Magnetbänder. Ganz allgemein weisen diese Magnetaufzeichnungsträger eine Struktur auf, welche aus einem Substrat und einer darauf aufgebrachten magnetischen Beschichtung besteht. Substrate können starr oder flexibel sein. Starr sind die Substrate im allgemeinen bei den Magnetplatten, jedoch gibt es auch Magnetplatten mit flexiblem Substrat, wie z. B. die sogenannten Floppy Disks. Magnetbänder haben naturgemäß alle flexible Substrate. Übliche starre Substrate bestehen aus Aluminium, Aluminiumlegierungen, wie z. B. Aluminiummagnesium, oder aus Silicium. Alle diese Materialien sind hitzebeständig. Flexible Substratmaterialien sind organischer Natur. Zu ihnen gehören beispielsweise die Polyester, von denen ein oft benutzter Vertreter von der Firma Du Pont unter dem Handelsnamen Mylar vertrieben wird. Soll ein Magnetaufzeichnungsträger mit flexiblem Substrat mittels des weiter unten beschriebenen erfindungsgemäßen Verfahrens hergestellt werden, so muß das Substrat hitzebeständig sein, was für Polyester nicht zutrifft. Ein geeignetes Substratmaterial in einem solchen Fall ist Polyimid. Die auf dem Substrat aufgebrachte Magnetschicht hat eine Dicke im Bereich zwischen 0,1 und 0,8 $\mu$m, bevorzugt von 0,3 $\mu$m. Mit Schichtdicken innerhalb des genannten Bereichs können die erwünschten großen Speicherdichten realisiert werden. Die magnetische Beschichtung besteht aus einem Bindemittel, den magnetischen Teilchen und gegebenenfalls abriebfesten Teilchen. Unter Bindemittel wird sowohl die Matrix verstanden, in welche die magnetischen Teilchen in der fertigen magnetischen Beschichtung eingebaut sind bzw. welche die magnetischen Teilchen in der fertigen magnetischen Beschichtung abdeckt, als auch das Material, welches erst im Laufe der Herstellung der magnetischen Beschichtung in diese Matrix umgewandelt wird. Typischerweise ist das Bindemittel ein Material aus der Klasse der temperaturstabilen Polymeren, zu denen z. B. Epoxid-Phenolharze, Polyimid, Melamin, Polyamid und Polypyrrolidin gehören. Die magnetischen Teilchen bestehen aus Eisen oder aus mit Kobalt dotiertem Eisen. Sie sind nadelförmig, wobei das Längen- und Dickenverhältnis zwischen 5 : 1 und 10 : 1 liegt. Die Länge der Eisenteilchen liegt zwischen 0,08 und 0,8 $\mu$m. Die gegebenenfalls vorhandenen abriebfesten Teilchen, die verhindern sollen, daß es beim Schleifen des Magnetkopfs auf der Magnetschicht zu Abrieb kommt, haben bevorzugt eine kuglige Gestalt, und ihr Durchmesser ist kleiner gleich der Dicke der Magnetschicht. Sie bestehen bevorzugt aus einem harten keramischen Material, wie z. B. Aluminiumoxid, Siliciumcarbid oder Siliciumnitrid.

Anhand der Fign. 1 bis 3 werden im folgenden drei verschiedene Ausführungsformen des erfindungsgemäßen Magnetaufzeichnungsträgers beschrieben.

Die Fig. 1 zeigt in schematischer Querschnittsdarstellung einen Ausschnitt aus einem Magnetaufzeichnungsträger, beispielsweise einer Magnetplatte mit starrem Substrat, welches sich von den bekannten Magnetplatten nur dadurch unterscheidet, daß die magnetischen Teilchen aus Eisen und nicht aus $Fe_2O_3$ bestehen, wobei die Eisenteilchen kleiner sind als die Eisenoxidteilchen in den bekannten Magnetplatten. Bei der in der Fig. 1 gezeigten Ausführungsform des erfindungsgemäßen Magnetaufzeichnungsträgers ist auf einem Substrat 1 eine magnetische Beschichtung aufgebracht, welche aus einem Bindemittel 2, den in ihm dispergierten magnetischen Eisenteilchen 3 und gegebenenfalls - nicht gezeigten - abriebfesten Teilchen, bevorzugt aus Aluminiumoxid, besteht. Die Dicke der magnetischen Beschichtung und die Größe der Eisenteilchen liegen im Bereich der oben angegebenen Werte.

In der Fig. 2 ist ein Ausschnitt aus einer weiteren Ausführungsform des erfindungsgemäßen Aufzeichnungsträgers in schematischer Querschnittsdarstellung gezeigt. Die in der Fig. 2 gezeigte Ausführungsform unterscheidet sich im wesentlichen von der in der Fig. 1 gezeigten dadurch, daß die magnetischen Eisenteilchen 3 mit einer Schicht aus Siliciumdioxid oder aus einem Siliciumdioxid/Aluminiumoxid-Gemisch eingehüllt sind. Die Dicke der Umhüllung liegt im Bereich zwischen 2 und 50 nm, bevorzugt zwischen 8 und 20 nm. Die Umhüllung erhöht - gegenüber der in Fig. 1 gezeigten Ausführungsform - die Sicherheit, daß praktisch alle Eisenteilchen einzeln in regelmäßiger Verteilung in der Magnetschicht vorliegen. Bei den in den Fign. 1 und 2 gezeigten Ausführungsformen ist die Flächendichte der magnetischen Teilchen - je nach der Pigment-Volumkonzentration und der Teilchengröße - ungefähr $10^9$ bis $10^{10}$ Teilchen/cm$^2$.

Die in der Fig. 3 gezeigte Ausführungsform unterscheidet sich deutlich in ihrem Aufbau von den in den Fign. 1 und 2 gezeigten. Auf dem Substrat 1 ist eine im wesentlichen geschlossene Monoschicht aus mit einer Umhüllung 4 versehenen Eisenteilchen 3 aufgebracht. Monoschicht bedeutet in diesem Zusammenhang, daß nur eine Lage von Eisenteilchen vorliegt. Die Dicke der Monoschicht liegt im Bereich zwischen etwa 0,02 und etwa 0,05 µm. Auf der Schicht aus den Magnetteilchen ist eine Schicht aus dem Bindemittel 2 aufgebracht, welche gegebenenfalls - nicht gezeigte - abriebfeste Teilchen enthält. Zur Verbesserung der Haftung der Eisenteilchen auf dem Substrat, welche auf elektrostatischen Kräften beruht, befindet sich zwischen dem Substrat 1 und der Schicht aus den Eisenteilchen 3 eine dünne aktive Schicht 5. Die Schicht 5 kann aus einem Gemisch eines Epoxidharzes und eines Polyamids bestehen oder von einer Monoschicht aus einem kationischen Polyelektrolyten gebildet werden, welcher aus einer wässrigen Lösung von Polyäthylenimin oder Polyacrylamid erzeugt worden ist. Die Schichtdicken der Schichten 5 und der aus den Eisenteilchen 3 und dem Bindemittel 2 bestehenden Schichten liegen zusammengenommen im Bereich zwischen etwa 0,05 und etwa 0,3 µm. Die Umhüllung 4 der Eisenteilchen 3 kann in derselben Weise zusammengesetzt und genauso dick sein, wie bei den umhüllten Eisenteilchen, welche in der in der Fig. 2 gezeigten Ausführungsform vorhanden sind. Auch bei der in der Fig. 3 gezeigten Ausführungsform ist die Flächendichte der Teilchen ungefähr $10^9$ bis $10^{10}$ Teilchen/cm$^2$.

Das erfindungsgemäße Verfahren verwendet viele der Verfahrensschritte - zum Teil in derselben Reihenfolge -, die bei der Herstellung der bekannten Magnetplatten angewandt werden. So werden bei dem erfindungsgemäßen Verfahren die magnetischen Teilchen und das gegebenenfalls abriebfeste Teilchen enthaltende Bindemittel auf das Substrat aufgebracht. Das Bindemittel liegt dabei in niedermolekularer Form, vermischt mit einem Lösungsmittel oder einem Lösungsmittelgemisch vor. Die Mischung hat eine niedrige Viskosität, so daß sie z. B. mittels Aufschleudern auf das Substrat aufgebracht werden kann. Nach dem Aufbringen der das Bindemittel enthaltenden Mischung wird das Lösungsmittel verdampft und das Bindemittel gehärtet, d. h. polymerisiert. Üblicherweise wird in einem letzten Verfahrensschritt die dann vorliegende magnetische Beschichtung poliert. Wesentlich unterscheidet sich das erfindungsgemäße Verfahren von dem bekannten Verfahren zur Herstellung von Magnetplatten dadurch, daß die in der Form von Eisenoxid auf das Substrat aufgebrachten Teilchen zu Eisen reduziert werden, und zwar, wenn die Magnetteilchen für sich, d. h. ohne das Bindemittel, aufgebracht werden, direkt nach dem Aufbringen, und wenn die Magnetteilchen dispergiert im Bindemittel aufgebracht werden, überlappend mit oder nach dem Aushärten des Bindemittels.

Im folgenden werden die Herstellung der in den Fign. 1 bis 3 dargestellten Ausführungsformen des erfindungsgemäßen Magnetaufzeichnungsträgers beschrieben, wobei jeweils davon ausgegangen wird, daß es sich bei dem Aufzeichnungsträger um eine Magnetplatte mit starrem Substrat handelt. Die angegebenen Herstellverfahren lassen sich aber ohne Änderung auf die Herstellung von Magnetplatten mit flexiblem Substrat übertragen, und bei der Herstellung von Magnetbändern ist lediglich das Verfahren, mit dem die das Bindemittel enthaltende Mischung aufgebracht wird, zu modifizieren.

Bei der Herstellung der in der Fig. 1 gezeigten Ausführungsform werden Eisenoxidpartikel zusammen mit dem Bindemittel, wie z. B. einem Epoxidharzpräparat, üblicherweise abriebfesten Partikeln, z. B aus $Al_2O_3$ und gegebenenfalls Zusätzen wie einem Netzmittel, in einem Lösungmittel oder Lösungmittelgemisch dispergiert. Solche Dispersionen werden in Rührwerken, Kugelmühlen bzw. Perlmühlen erzeugt. Die Dispersion besteht bevorzugt - jeweils in Gewichtsprozent - zu ungefähr 60 % aus einem Lösungmittelgemisch (Gemisch aus Xylol, Äthylamylketon und Isophoron) und zu ungefähr 40 % aus einem Feststoffgemisch (ungefähr 50 % Bindemittel, ungefähr 49 % $Fe_2O_3$ und ungefähr 1 % $Al_2O_3$). Mit der fertigen Dispersion wird das Magnetplattensubstrat, welches bevorzugt aus einer Aluminiummagnesiumlegierung besteht, beschichtet, und anschließend wird mittels Abschleuderns die gewünschte Schichtdicke (bevorzugt ungefähr 0,3 µm) eingestellt. Beim Beschichten befindet sich bevorzugt unter dem Substrat ein Permanentmagnet, und die Dispersion wird an der Stelle, unter der sich der Spalt des Magneten befindet, d. h. dort, wo die Feldstärke am höchsten ist, aufgebracht. Dabei werden die magnetischen Teilchen in Drehrichtung parallel zur Substratoberfläche ausgerichtet. Es folgt das Aushärten der aufgebrachten magnetischen Beschichtung, wozu ungefähr 2 Stunden lang auf eine Temperatur in der Größenordnung von 200°C erhitzt wird. Anschließend werden bei einer Temperatur im Bereich zwischen 250 und 400°C, bevorzugt bei 325°C, in einer Wasserstoffatmosphäre die Eisenoxidteilchen zu reinem Eisen reduziert. Die Reduktion kann auch in einer Stickstoff und Wasserstoff enthaltenden Atmosphäre durchgeführt werden, jedoch ist es dann erforderlich, daß die Reduktionszeiten verlängert und die anzuwendenden Temperaturen erhöht werden. Das verwendete Bindemittel muß chemisch und thermisch so resistent sein, daß es sich unter den Reduktionsbedingungen nicht zersetzt. Dies trifft für das beispielhaft angegebene Epoxidharz zu. Andere Bindemittel, welche diese Voraussetzung erfüllen, sind Polyimid, Melamin, Polyamid und Polypyrrolidin. Die durch die Reduktion bewirkten Veränderungen der magnetischen Eigenschaften sind in der ersten Spalte der Tabelle aufgelistet. Im letzten Verfahrensschritt wird die Oberfläche der magnetischen Beschichtung poliert. Nun muß die magnetische Beschichtung nur noch - gegebenenfalls nach einem Reinigungsschritt - mit einem Gleitmittelfilm versehen werden.

**Tabelle**

Prozentuale Veränderung der magnetischen Eigenschaften (Ausgangs- und Endwerte von jeweils einer Probe in Klammern 5*) durch Reduktion des $Fe_2O_3$

| | Magnetteilchen im Bindemittel dispergiert | | | Schicht aus Magnetteilchen 4* |
| | Reduktion nach Härtung des Bindemittels | | Reduktion vor Härtung des Bindemittels | |
| | Teilchen beschichtet 1* | Teilchen unbeschichtet 2* | Teilchen unbeschichtet 3* | |
|---|---|---|---|---|
| Sättigungsmoment | ≤ 50 % $(5,7 \cdot 10^{-3} \to 8,4 \cdot 10^{-3}$ emu) | ≤ 50 % $10 \cdot 10^{-3} \to 15 \cdot 10^{-3}$ emu | unverändert | ≤ 40 % $(1,1 \cdot 10^{-3} \to 1,5 \cdot 10^{-3}$ emu/cm$^2$) |
| Remanenz | ≤ 48 % $3 \cdot 10^{-3} \to 4,4 \cdot 10^{-3}$ emu | ≤ 40 % $8,2 \cdot 10^{-3} \to 11,5 \cdot 10^{-3}$ emu | " | |
| Koerzitivfeldstärke | ≤ 95 % (490 → 975 Oe) | ≤ 150 % (284 → 770 Oe) | 100 % (270 → 560 Oe) | ≤ 150 % (350 → 880 Oe) |

| 1* Ergebnisse von 4 Proben | 2* Ergebnisse von 6 Proben | 3* Ergebnisse von 2 Proben | 4* Ergebnisse von 7 Proben |
|---|---|---|---|

5* Die angegebenen emu(electromagnetic unit)-Werte sollen nur die Größenordnung der drei Parameter veranschaulichen. Die in den beiden ersten Spalten angegebenen Werte wurden an Proben gemessen, welche zwar alle eine Fläche von ungefähr 1 cm$^2$ hatten, aber unterschiedliche Schichtdicken und unterschiedliche Magnetteilchendichten aufwiesen. Außerdem befand sich beim Aufbringen der beschichtet Teilchen und das Bindemittel enthaltenden Dispersion - anders als beim Aufbringen der Teilchen zur Herstellung der anderen Proben - kein Permanentmagnet unter dem Substrat. Deshalb sind die angegebenen emu-Werte nicht miteinander vergleichbar. 1Oe = 79,5775 A/m, 1 emu = $10^{-6}$ A/m.

Zur Herstellung der in der Fig. 2 gezeigten Ausführungsform werden die Eisenoxidteilchen zunächst mit einer Schicht aus $SiO_2$ oder $SiO_2/Al_2O_3$ umhüllt. Eine aus $SiO_2/Al_2O_3$, bestehende Umhüllung wird bevorzugt hergestellt, indem die Eisenoxidpartikel in Wasser dispergiert und dann unter Einhaltung festgelegter pH-Werte im basischen Bereich und erhöhten Temperaturen zunächst mit einer Silikat- und dann mit einer Aluminiumsalzlösung behandelt werden. $SiO_2/Al_2O_3$ -Schichten lassen sich beispielsweise in der folgenden Weise auf Eisenoxidpartikeln erzeugen:

45 g $Fe_2O_3$-Teilchen einer einheitlichen Länge, bevorzugt im Bereich zwischen 0,1 und 1,0 µm, welche im Handel erhältlich sind, werden mit 300 ml destilliertem Wasser unter Rühren bei ungefähr 20 000 Upm auf 90°C erhitzt. Der pH-Wert wird durch tropfenweise Zugabe von NaOH-Lösung auf 10,0 eingestellt. Nach Zugabe von 20 ml einer 40-%-igen Natriumsilikatlösung wird der pH-Wert sehr schnell durch tropfenweise Zugabe von Salzsäure auf 9,0 abgesenkt. Das Rühren wird eine Stunde lang fortgesetzt, wobei die Temperatur von 90°C aufrechterhalten wird und Abweichungen vom pH-Wert von 9,0 ± 0,1 durch Zugabe von NaOH bzw. HCl korrigiert werden. Nach Ablauf der Reaktionszeit werden 20 ml einer 50-%-igen Aluminiumsulfatlösung sehr schnell zugesetzt und der pH-Wert sofort durch Zugabe von Salzsäure auf 8,0 reduziert. Nach weiteren 60 Minuten Reaktionszeit unter Fortsetzung des Rührens und der Einhaltung einer Reaktionstemperatur im Bereich zwischen 93 und 95°C ist die Behandlung beendet. Die so umhüllten Eisenoxidteilchen werden abfiltriert, gründlich mit destilliertem Wasser gespült, bei 150°C getrocknet und schließlich pulverisiert.

Zur Herstellung einer Umhüllung der Eisenoxidpartikel, welche aus kolloidalem Siliciumdioxid besteht, wird in vorteilhafter Weise so vorgegangen, daß eine wässrige Aufschlämmung der Eisenoxidpartikel und eine wässrige Aufschlämmung von kolloidalen Siliciumdioxidpartikeln hergestellt wird. In der erstgenannten Aufschlämmung wird der pH-Wert auf einen Wert eingestellt, bei dem die Eisenoxidteilchen eine positive elektrostatische Ladung aufnehmen. Die Siliciumdioxidpartikel enthaltende Aufschlämmung wird auf denselben pH-Wert eingestellt, was bewirkt, daß die Siliciumdioxidpartikel eine negative elektrostatische Ladung annehmen. Werden die beiden Aufschlämmungen vereinigt, so bedecken sich die Eisenoxidteilchen mit den Siliciumdioxidpartikeln und binden sie irreversibel an sich. Dieses Verfahren ist aus der US-Patentschrift 4 280 918 bekannt. Im einzelnen geht man dabei so vor:

γ-Fe₂O₃-Teilchen der gewünschten Korngröße werden mit einer geeigneten Säure, wie z. B. Salzsäure gemischt, und die hergestellte Mischung wird dann eine Zeit lang gerührt. Die Eisenoxidteilchen neigen dazu, Aggregate zu bilden. Das Rühren erleichtert die Trennung der Aggregate in die einzelnen Teilchen, indem Brücken zwischen den Teilchen aufgelöst werden. Nach dem Rühren wird der pH-Wert der Mischung auf einen geeigneten Wert eingestellt, um eine positive elektrostatische Ladung auf den magnetischen Teilchen zu erzeugen. Eisenoxidteilchen zeigen eine ausgeprägte positive elektrostatische Ladung im pH-Wert-Bereich zwischen 3 und 6. Deshalb wird der pH-Wert der Mischung auf einen Wert innerhalb dieses Bereichs eingestellt. Außerdem wird eine Mischung aus kolloidalen Siliciumdioxidpartikeln und einer Säure bereitet, wobei der pH-Wert etwa auf denselben Wert eingestellt wird, wie in der die magnetischen Teilchen enthaltenden Mischung. Kolloidale Siliciumdioxidpartikel zeigen eine beachtliche negative elektrostatische Ladung im pH-Wert-Bereich zwischen 3 und 6. Die beiden Mischungen werden vereinigt und dann gerührt, wobei bevorzugt zusätzlich mit Ultraschall angeregt wird, um die Reaktion zu erleichtern. Die kolloidalen Siliciumdioxidpartikel mit ihrer negativen elektrostatischen Ladung werden von den positiv geladenen Eisenoxidteilchen angezogen. Bevorzugt enthält die Mischung mehr kolloidale Siliciumdioxidpartikal als notwendig ist, um die Eisenoxidpartikel vollständig zu bedecken. Dieser Überschuß ist deshalb vorteilhaft, weil dann genügend Siliciumdioxidpartikel vorhanden sind, um ein von anderen Eisenoxidteilchen abgetrenntes Eisenoxidteilchen schnell zu umhüllen, bevor es wieder von anderen Eisenoxidteilchen angezogen weden kann. Nach dem Umhüllen sind die Eisenoxidteilchen mit der adsorbierten Monoschicht aus beschützenden kolloidalen Teilchen irreversibel verbunden und dadurch weit genug voneinander entfernt, so daß ihre gegenseitige magnetische Anziehung und damit ihre Tendenz zu aggregieren, beachtlich reduziert ist.

Ein Ausführungsbeispiel möge das Verfahren noch weiter veranschaulichen:

g γ-Eisenoxidpulver wurden mit 50 ml einer 5-%-igen HCl gemischt und 3 Minuten lang einer Ultraschallbehandlung mit einer Leistung von 400 Watt unterworfen. Daraufhin wurden 12 ml konzentrierte HCl zugefügt, und die Mischung wurde 40 Minuten lang gerührt. Anschließend wurden die Eisenoxidteilchen mit Wasser gewaschen, bis ein pH-Wert von 3,5 erreicht war. Außerdem wurden 5 g kolloidale Siliciumdioxidpartikel mit einem kationischen Ionenaustauscherharz gemischt und gerührt, bis ein pH-Wert von 3,5 erreicht war. Alternativ wäre es auch möglich gewesen, die pH-Wertänderung durch die Zugabe von verdünnter Schwefel- oder Salzsäure zu erreichen. Das Ionenaustauscherharz wurde mittels Filtration entfernt, und die kolloidalen Siliciumdioxidpartikel wurden zu der Aufschlämmung der Eisenoxidpartikel zugefügt. Die Mischung wurde dann 10 Minuten lang einer Ultraschallbehandlung mit einer Leistung von 400 Watt unterworfen. Ein Überschuß von Siliciumdioxidpartikeln und anderes nichtmagnetisches Material wurden dann mitttels magnetischer Sedimentation entfernt. Der pH-Wert der Mischung wurde dann auf einen Wert in der Nähe von 9,5 zunächst durch die Zugabe von Wasser und verschiedene Dekantierungsoperationen und dann durch die Zugabe einer geeigneten Base, wie z. B. Natriumhydroxid erhöht. Die umhüllten Eisenoxidteilchen wurden schließlich abfiltriert und getrocknet.

Die eingehüllten Eisenoxidteilchen werden eingesetzt, um eine Magnetplatte, wie sie die Fig. 2 wiedergibt, herzustellen. Dabei wird genauso vorgegangen wie bei der Herstellung der in der Fig. 1 dargestellten Magnetplatte, mit dem einen Unterschied, daß bei der Herstellung der in der Fig. 1 gezeigten Ausführungsform die Eisenoxidpartikel nicht umhüllt sind. Die dabei bei der Reduktion bewirkten Veränderungen der magnetischen Eigenschaften sind in der zweiten Spalte der Tabelle aufgelistet.

Zur Herstellung der in der Fig. 3 dargestellten Ausführungsform des erfindungsgemäßen Magnetaufzeichnungsträgers werden umhüllte Eisenoxidteilchen, welche wie oben beschrieben hergestellt worden sind, als Monoschicht auf das Substrat aufgebracht. Das Aufbringverfahren ist in der US-Patentschrift 4 333 961 beschrieben. Das Substrat muß für die Aufnahme der umhüllten Eisenoxidteilchen präpariert werden. Diese Präparation erfolgt durch das Aufbringen einer aktiven Schicht auf das Substrat. Das Aufbringverfahren beruht auf einer elektrostatischen Wechselwirkung zwischen ionisch geladenen Teilchen mit einer entgegengesetzt ionisch geladenen Oberfläche in einer wässrigen Umgebung. Dies macht eine geladene Oberflächenschicht, eben die aktive Schicht, erforderlich. Und es gibt mehrere Wege, um eine solche aktive Schicht zu erzeugen.

Bei einem dieser Wege wird die aktive Schicht erzeugt, indem ein Epoxidharz oder ein Polyamid, jeweils gelöst in Cyclohexanon, auf das Substrat aufgeschleudert wird. Als Epoxidharz kann beispielsweise das von der Shell Corporation unter dem Handelsnamen Epon 1004 vertriebene und als Polyamid das von der Henkel Corporation unter dem Handelsnamen Versamid 100 vertriebene eingesetzt werden. Die aufgebrachte Schicht ist ungefähr 50 nm dick. Die Schicht wird bei ungefähr 150°C etwa eine halbe Stunde lang getempert, um sie teilweise zu polymerisieren bzw. den Anteil der niedermolekularen Fraktion zu reduzieren, ohne daß dabei alle NH₂- und NH-Gruppen eliminiert werden, welche die Quelle der positiven Oberflächenladung in einer wässrigen Umgebung sind.

Alternativ kann die aktive Schicht erzeugt werden, indem eine Monoschicht eines kationischen Polyelektrolyten aus einer wässrigen Lösung, beispielsweise von Polyäthylenimin oder Polyacrylamid, auf das Substrat aufgebracht wird. Anschließend wird ein Überschuß weggewaschen, wodurch die Bildung der aktiven Schicht abgeschlossen wird. Es ist auch möglich, zur Herstellung der aktiven Schicht Verfahren wie Ultraviolett-Aufpfropfen oder Plasmapolymerisation zu verwenden. Nachdem die aktive Schicht erzeugt ist, wird zum Aufbringen der magnetischen Teilchen das Plattensubstrat bevorzugt auf einen sich langsam drehenden Beschichter gelegt, den man mit einer Geschwindigkeit zwischen 0,1 und 5 Upm über dem Spalt eines Permanentmagneten rotieren läßt. Die mit Siliciumdioxid oder SiO₂/Al₂O₃ umhüllten Eisenoxidteilchen werden in der Form einer wässrigen Dispersion auf das Substrat über dem Bereich der höchsten magnetischen Feldstärke des Magneten injiziert oder

6

EP 0 203 205 B1

gepumpt, wobei die magnetischen Teilchen in Drehrichtung parallel zur Substratoberfläche ausgerichtet werden. Die Orientierung der magnetischen Teilchen erfolgt, solange sie noch dispergiert vorliegen, d. h. bevor der eigentliche Beschichtungsvorgang stattfindet. Die negativ geladenen Teilchen gehen mit der positiv geladenen aktiven Schicht auf dem Substrat aufgrund elektrostatischer Wechselwirkung eine Bindung ein. Sobald die Teilchen auf der Oberfläche aufliegen, bleiben sie auch dort. Wegen der elektrostatischen Abstoßung zwischen den magnetischen Teilchen läßt sich ein Überschuß an magnetischen Teilchen leicht abwaschen. Das beschichtete Substrat wird dann trockengeschleudert und dann etwa 15 Minuten auf ungefähr 150°C erhitzt. Das beschriebene Verfahren kann so abgeändert werden, daß das Substrat zunächst mit einer dünnen Wasserschicht bedeckt wird und dann wie oben beschrieben fortgefahren wird. Die aufgebrachte Schicht hat eine hohe Pigmentvolumenkonzentration und eine gute magnetische Orientierung. Dank der Umhüllung zeigen die magnetischen Teilchen keine Neigung zur Agglomeration.

Im nächsten Verfahrensschritt wurde die aufgebrachte Schicht aus umhüllten Eisenoxidteilchen bei erhöhter Temperatur einer Wasserstoffatmosphäre ausgesetzt.

Bevorzugt wird die Schicht dabei eine Stunde lang bei einer Temperatur von 350°C einem Wasserstoffstrom von 30 $cm^3$ pro Minute ausgesetzt. Nach der Reduktion wurden bei sieben Proben die in der letzten Spalte der Tabelle angegebenen, durch die Reduktion bewirkten Veränderungen der magnetischen Eigenschaften gemessen. Eine mikroskopische Untersuchung der Schicht ergab, daß sich durch die Reduktion die Lage der Teilchen in der Schicht in keiner Weise verändert hatte.

Auf die nach der Reduktion vorliegende Struktur wird eine Dispersion aufgebracht, welche - abgesehen vom Fehlen der magnetischen Teilchen - zusammengesetzt ist wie die bei der Herstellung der in Fign. 1 und 2 gezeigten Magnetaufzeichnungsträger verwendete Dispersion. Anschließend wird die das Bindemittel enthaltende Schicht gehärtet, wozu ungefähr 1 Stunde lang auf ungefähr 250°C erhitzt wird. Die Bedingungen (Viskosität der Dispersion, Umdrehungsgeschwindigkeit) werden dabei so gewählt, daß das nach dem Aushärten auf dem Substrat aufliegende Material zwischen ungefähr 0,05 und 0,3 µm, bevorzugt ungefähr 0,1 µm dick ist. Die nun vorliegende Struktur wird noch poliert. Durch das Aufbringen der das Bindemittel enthaltenden Schicht erhält die magnetische Beschichtung eine hervorragende mechanische Stabilität und Abriebfestigkeit. Die magnetischen Eigenschaften ändern sich durch ihr Aufbringen nicht.

## Patentansprüche

1. Magnetaufzeichnungsträger, welcher auf einem Substrat eine magnetische Beschichtung aufweist, deren Dicke größenordnungsmäßig 1 µm oder kleiner ist und welche aus einem Bindemittel, magnetischen Teilchen und gegebenenfalls abriebfesten Teilchen besteht, *dadurch gekennzeichnet*, daß die magnetischen Teilchen im wesentlichen nicht aggregierte Eisenteilchen (3) sind.

2. Magnetaufzeichnungsträger nach Patentanspruch 1, *dadurch gekennzeichnet*, daß die Eisenteilchen (3) mit einer Schicht (4) aus $SiO_2$ oder $SiO_2/Al_2O_3$ umhüllt sind.

3. Magnetaufzeichnungsträger nach Patentanspruch 1 oder 2, *dadurch gekennzeichnet*, daß die Eisenteilchen (3) in dem Bindemittel (2) homogen verteilt sind.

4. Magnetaufzeichnungsträger nach Patentanspruch 2, *dadurch gekennzeichnet*, daß die umhüllten Eisenteilchen (3) eine Schicht bilden und mittels elektrostatischer Kräfte an eine das Substrat (1) bedeckende aktive, vor dem Aufbringen der Eisenteilchen (3) aus einer wässrigen Dispersion positive Oberflächenladungen aufweisende Schicht (5) gebunden sind, und daß die Schicht aus den Eisenteilchen (3) mit dem Bindemittel (2), in dem gegebenenfalls abriebfeste Teilchen dispergiert sind, bedeckt ist.

5. Magnetaufzeichnungsträger nach einem der Ansprüche 1 bis 4, *dadurch gekennzeichnet*, daß als Bindemittel (2) ein Material aus der Klasse der temperaturstabilen Polymeren, wie zum Beispiel Polyimid, Melamin, Polyamid, Polypyrrolidin und Epoxidharz, dient.

6. Verfahren zum Herstellen eines Magnetaufzeichnungsträgers gemäß einem der Patentansprüche 1 bis 5, wobei Eisenoxidteilchen, das Bindemittel und gegebenenfalls die abriebfesten Teilchen auf das Substrat aufgebracht werden und das Bindemittel gehärtet wird, *dadurch gekennzeichnet*, daß die aufgebrachten Eisenoxidteilchen zu Eisen in einer Wasserstoff enthaltenden Atmosphäre reduziert werden.

7. Verfahren nach Patentanspruch 6, *dadurch gekennzeichnet*, daß die Eisenoxidteilchen zunächst mit einer Schicht aus $SiO_2$ oder $SiO_2/Al_2O_3$ umhüllt werden.

8. Verfahren nach Patentanspruch 6 oder 7, *dadurch gekennzeichnet*, daß die Eisenoxidteilchen und gegebenenfalls die abriebfesten Teilchen in einer Mischung aus dem Bindemittel und einem Lösungsmittel oder einem Lösungsmittelgemisch dispergiert werden und die Dispersion auf das Substrat aufgebracht und gehärtet wird und die Eisenoxidteilchen anschließend oder überlappend in einer Wasserstoff enthaltenden Atmosphäre reduziert werden.

9. Verfahren zum Herstellen eines Magnetaufzeichnungsträgers gemäß einem der Patentansprüche 4 oder 5, bei dem zunächst auf ein Substrat eine dünne positive Ladungen aufweisende Schicht aufgebracht wird, zunächst Eisenoxidteilchen mit einer Schicht aus $SiO_2$ oder $SiO_2/Al_2O_3$ umhüllt werden, anschließend die beschichteten Eisenoxidteilchen in einer wässrigen Dispersion auf diese Schicht aufgebracht werden und die nicht haftenden Eisenoxidteilchen mit Wasser weggespült werden, daß anschließend die aufgebrachten Eisenoxidteilchen in einer Wasserstoff enthaltenden Atmosphäre reduziert werden und daß daraufhin mit einer Bindemittel, Lösungsmittel und gegebenenfalls abriebfeste Teilchen enthaltenden Dispersion beschichtet und diese dann gehärtet wird.

10. Verfahren nach einem der Patentansprüche 6 bis 9, *dadurch gekennzeichnet*, daß sich beim Aufbringen der Eisenoxidteilchen bzw. der das Bindemittel und die Eisenoxidteilchen enthaltenden Dispersion ein Permanentmagnet unter dem sich drehenden Substrat befindet und die Eisenoxidteilchen an der Stelle, welche sich über dem Spalt des Permanentmagneten befindet, aufgebracht werden.

11. Verfahren nach einem der Patentansprüche 6 bis 10, *dadurch gekennzeichnet*, daß bei einer Temperatur im Bereich zwischen 250 und 400°C in einem Wasserstoffstrom 1 bis 1,5 Stunden lang reduziert wird.

**Claims**

1. Magnetic record carrier having on a substrate a magnetic coating whose thickness is in the order of 1 μm or smaller, and which consists of a binder, magnetic particles and optionally abrasion-resistant particles, characterized in that the magnetic particles are substantially non-aggregated iron particles (3).

2. Magnetic record carrier as claimed in claim 1, *characterized* in that the iron particles (3) are coated with a layer (4) of $SiO_2$ or $SiO_2/Al_2O_3$.

3. Magnetic record carrier as claimed in any one of claims 1 or 2, *characterized* in that the iron particles (3) are homogeneously distributed in the binder (2).

4. Magnetic record carrier as claimed in claim 2, *characterized* in that the coated iron particles (3) form a layer and, by means of electrostatic forces, are bonded to an active layer (5) covering the substrate (1) and exhibiting positive surface charges prior to the application of the iron particles (3) from an aqueous dispersion, and that the iron particle (3) layer is covered with a binder (2) in which abrasion-resistant particles are optionally dispersed.

5. Magnetic record carrier as claimed in any one of claims 1 to 4, *characterized* in that as a binder (2) a material selected from the class of temperature-stable polymers, as e. g. polyimide, melamine, polyamide, polypyrrolidine and epoxy resin is used.

6. Method of making a magnetic record carrier in accordance with any one of claims 1 to 5, where iron oxide particles, the binder and optionally the abrasion-resistant particles are deposited on the substrate and where the binder is cured, *characterized* in that the deposited iron oxide particles are reduced to iron in a hydrogen-containing atmosphere.

7. Method as claimed in claim 6, *characterized* in that the iron oxide particles are first coated with a layer of $SiO_2$ or $SiO_2/Al_2O_3$.

8. Method as claimed in any one of claims 6 or 7, *characterized* in that the iron oxide particles and optionally the abrasion-resistant particles are dispersed in a mixture of the binder and a solvent, or a solvent mixture, and that the dispersion is deposited onto the substrate and cured, and the iron oxide particles are subsequently or overlappingly reduced in a hydrogen-containing atmosphere.

9. Method of making a magnetic record carrier as claimed in claim 4 or 5, where first onto a substrate a thin layer exhibiting positive charges is deposited, where first iron oxide particles are coated with a layer of $SiO_2$ or $SiO_2/Al_2O_3$, and subsequently the coated iron oxide particles are applied in an aqueous dispersion on this layer and the non-adhering iron oxide particles are rinsed-off with water, that subsequently the iron oxide particles are reduced in a hydrogen-containing atmosphere, and that subsequently coating with a dispersion containing binder, solvents and optionally abrasion-resistant particles is effected and said dispersion is then cured.

10. Method as claimed in any one of claims 6 to 9, *characterized* in that during the application of the iron oxide particles or of the dispersion comprising the binder and the iron oxide particles, respectively, a permanent magnet is provided beneath the rotating substrate, and that the iron oxide particles are deposited in that spot which is over the gap of the permanent magnet.

11. Method as claimed in any one of claims 6 to 10, *characterized* in that reduction takes place at a temperature between 250 and 400°C in a hydrogen stream for 1 to 1.5 hours.

## Revendications

1. Support d'enregistrement magnétique comportant, sur un substrat, un revêtement magnétique, dont l'épaisseur est d'un ordre de grandeur égal à 1 μm ou moins et qui est constitué par un liant, des particules magnétiques et éventuellement des particules résistantes à l'usure, *caractérisé* en ce que les particules magnétiques sont pour l'essentiel des particules de fer non agrégées (3).

2. Support d'enregistrement magnétique selon la revendication 1, *caractérisé* en ce que les particules de fer (3) sont enrobées par une couche (4) de $SiO_2$ ou de $SiO_2/Al_2O_3$.

3. Support d'enregistrement magnétique selon la revendication 1 ou 2, *caractérisé* en ce que les particules de fer (3) sont réparties de façon homogène dans le liant (2).

4. Support d'enregistrement magnétique selon la revendication 2, *caractérisé* en ce que les particules de fer enrobées (3) forment une couche et sont liées, sous l'action de forces électrostatiques, à une couche active (5), qui recouvre le substrat (1) et comporte des charges de surface positives avant le dépôt des particules de fer (3) à partir d'une dispersion aqueuse, et que la couche formée des particules de fer (3) est recouverte par le liant (2), dans lequel sont éventuellement dispersées des particules résistantes à l'usure.

5. Support d'enregistrement magnétique selon l'une des revendications 1 à 4, *caractérisé* en ce qu'on utilise, comme liant (2), un matériau de la classe des polymères résistants à la température, comme par exemple un polyimide, de la mélamine, un polyamide, de la polypyrrolidine et une résine époxy.

6. Procédé pour fabriquer un support d'enregistrement magnétique selon l'une des revendications 1 à 5, dans lequel on dépose des particules d'oxyde de fer, le liant et éventuellement les particules résistantes à l'usure, sur le substrat, et on fait durcir le liant, *caractérisé* en ce qu'on réduit à l'état de fer les particules d'oxyde de fer déposées, dans une atmosphère contenant de l'hydrogène.

7. Procédé selon la revendication 6, *caractérisé* en ce qu'on enrobe tout d'abord les particules d'oxyde de fer avec une couche formée de $SiO_2$ ou de $SiO_2/Al_2O_3$.

8. Procédé selon la revendication 6 ou 7, *caractérisé* en ce qu'on disperse les particules d'oxyde de fer et éventuellement les particules résistantes à l'usure dans un mélange formé du liant et d'un solvant ou d'un mélange de solvants, qu'on dépose la dispersion sur le substrat et qu'on la fait durcir, et qu'on réduit ensuite ou simultanément les particules d'oxyde de fer dans une atmosphère contenant de l'hydrogène.

9. Procédé pour fabriquer un support d'enregistrement magnétique selon l'une des revendications 4 ou 5, selon lequel on dépose tout d'abord sur un substrat une couche mince contenant des charges positives, qu'on enrobe tout d'abord les particules d'oxyde de fer avec une couche formée de $SiO_2$ ou de $SiO_2/Al_2O_3$, qu'on dépose ensuite les particules d'oxyde de fer enrobées, dans une dispersion aqueuse, sur cette couche et qu'on élimine par lavage à l'eau les particules d'oxyde de fer non adhérentes, qu'on réduit ensuite les particules d'oxyde de fer déposées, dans une atmosphère contenant de l'hydrogène et qu'on réalise alors un enrobage avec une dispersion contenant un liant, un solvant et éventuellement des particules résistantes à l'usure et qu'on fait ensuite durcir cette dispersion.

10. Procédé selon l'une des revendications 6 à 9, *caractérisé* en ce que, lors du dépôt des particules d'oxyde de fer ou de la dispersion contenant le liant et les particules d'oxyde de fer, un aimant permanent est disposé au-dessous du substrat entraîné en rotation et les particules d'oxyde de fer sont déposées à l'endroit situé au-dessus de la fente de l'aimant permanent.

11. Procédé selon l'une des revendications 6 à 10, *caractérisé* en ce qu'on effectue la réduction à une température située dans la gamme comprise entre 250 et 400°C dans un courant d'hydrogène, pendant une durée de 1 à 1,5 heure.

FIG. 1

FIG.2

FIG.3